# EUROPÄISCHE PATENTSCHRIFT

(11) **EP 4 069 492 B1**
(45) Veröffentlichungstag und Bekanntmachung des Hinweises auf die Patenterteilung: **26.03.2025**
(21) Anmeldenummer: 20811690.5
(22) Anmeldetag: 30.11.2020
(51) Int. Cl.: B29C 49/48

(54) **BLASFORMWERKZEUG, STRECKBLASMASCHINE UND VERFAHREN ZUM FORMEN EINES BEHÄLTERS**
BLOW MOLD, STRETCH BLOW MOLDER AND METHOD FOR FORMING A CONTAINER
MOULE DE SOUFFLAGE, MOULE DE SOUFFLAGE À ÉTIRAGE ET PROCÉDÉ DE FORMATION D'UN RÉCIPIENT

(30) Priorität: 05.12.2019 CH 15502019
(43) Veröffentlichungstag der Anmeldung: 12.10.2022
(73) Patentinhaber: ALPLA Werke Alwin Lehner GmbH & Co. KG, 6971 Hard (AT)
(72) Erfinder: URABL, Stephan, 6973 Höchst (AT); SOKOLOV, Dmitry, 37120 Bovenden (DE); DEMIR, Adem, 6923 Lauterach (AT)
(74) Vertreter: Bohest AG Branch Ostschweiz
(86) Internationale Anmeldenummer: PCT/EP2020/083928
(87) Internationale Veröffentlichungsnummer: WO 2021/110594

(56) Entgegenhaltungen:
- EP-A2- 0 393 370
- GB-A- 882 790
- JP-A- S5 656 830
- KR-B1- 101 116 169
- US-A- 5 035 604
- US-A- 5 389 332
- US-A1- 2018 257 264

## Beschreibung

Die vorliegende Erfindung betrifft ein Blasformwerkzeug, eine Streckblasmaschine und ein Verfahren zum Formen eines Behälters gemäss dem Oberbegriff der unabhängigen Ansprüche.

Aus dem Stand der Technik sind unterschiedliche Verfahren und Vorrichtungen zum Formen eines Behälters bekannt.

Die Herstellung von hohlen Kunststoffbehältern geschieht typischerweise durch sogenannte Blasformverfahren. Die gebräuchlichsten Blasformverfahren sind dabei das Extrusionsblasformen und das Streckblasformen. Beide Blasformverfahren haben gemeinsam, dass die finale Form eines Kunststoffhohlkörpers in einem Blasformwerkzeug gegeben wird.

Diese beiden Blasformverfahren unterscheiden sich in wesentlichen Punkten.

Das Extrusionsblasverfahren zeichnet sich dadurch aus, dass ein Hohlkörper aus einem in die Länge gezogenen thermoplastischen Schlauch hergestellt wird. Im Streckblasprozess hingegen werden Hohlkörper aus einem vorgefertigten Hohlkörper, nämlich einem Preform, auch Vorformling, hergestellt, indem dieser in Umfangsrichtung und in Längsrichtung verstreckt wird. Der Kunststoff des Behälters ist im Anschluss biaxial verstreckt.

Generell kann gesagt werden, dass ein Fachmann erwarten würde, dass ein in einer Form aufgeblasener Körper, der im Extrusionsblasverfahren hergestellt wird, unmittelbar nach dem Aufblasen noch problemlos verformt werden kann. Bei einem streckgeblasenen Körper ist das nicht zwangsläufig erwartbar, weil ein Fachmann weiss, dass sich verstreckter Kunststoff nachträglicher Verformung widersetzt.

Bei Behältern, die in diesen Blasformverfahren hergestellt sind, kann auch am fertigen Behälter festgestellt werden, in welchem Verfahren diese hergestellt sind.

Extrusionsgeblasene Behälter weisen eine Quetschnaht im oder am Boden auf. Bei streckgeblasenen Behältern ist am Boden lediglich ein Anspritzpunkt sichtbar, welcher beim Herstellen des Preforms entsteht. Behälter, die im Extrusionsblasverfahren hergestellt wurden, sind zudem daran erkennbar, dass die Innenkontur im Wesentlichen der Aussenkontur folgt. Ein im Extrusionsblasverfahren geformtes Gewinde an einem Flaschenhals ist somit als Negativkontur im Innern des Behälters erkennbar. Bei streckgeblasenen Behältern ist jedoch insbesondere im Bereich der Ausgiessöffnung, die typischerweise im Spritzguss hergestellt ist, eine Innenkontur vorhanden, die von der Aussenkontur abweicht. Dabei kann die Aussenkontur beispielsweise ein Gewinde aufweisen und die Innenkontur glattwandig sein. Dies ist notwendig um die Prefoms im vorangegangenen Spritzgussverfahren zu entformen.

Ein Blasformwerkzeug ist typischerweise aus zwei Werkzeughälften gebildet, wobei der Aufbau auch mehr als zweiteilig sein kann. Das Blasformwerkzeug weist einen Formkörper mit einer Kavität auf und stellt damit ein sogenanntes Formnest zur Formung eines Behälters bereit. Je nach Behälterform ist dieses Formnest symmetrisch oder asymmetrisch. Bei asymmetrischen Formen können die zwei oder mehreren Werkzeughälften derart aufgeteilt sein, dass ihre Trennlinien an bevorzugten Orten des späteren Behälters ausgebildet werden und entsprechend nicht zwingend in gleichmässigen Bruchteilen aufgeteilt sein müssen.

Ein Blasformwerkzeug für einen Behälter wird typischerweise in drei Bereiche unterteilt, einen Bodenbereich, einen Mittelbereich und einen Kopfbereich. Ein fertiggestellter Behälter weist typischerweise einen Behälterboden auf, einen Behälterkörper und eine Behälterschulter. Die Behälterschulter ist jener Bereich, an den sich eine Ausgiessöffnung anschliesst. Die Ausgiessöffnung weist typischerweise Mittel zum Befestigen eines Verschlusses auf, beispielsweise eines Drehverschlusses. Die Behälterschulter wird im Kopfbereich des Blasformwerkzeugs geformt. Dabei wird typischerweise beim Blasformen des Behälters die Behälterschulter erst unterhalb der Mittel zum Befestigen eines Verschlusses aufgeblasen. Im Anschluss an die Behälterschulter, mit anderen Worten zwischen der Behälterschulter und dem Behälterboden, wird der Behälterkörper aufgeblasen. Dies entspricht im Wesentlichen dem Mittelbereich eines Blasformwerkzeugs. Der Behälterboden entsteht wiederum ihm Bodenbereich.

Der Formenbau ist unterschiedlichen Restriktionen unterworfen. Einerseits betrifft dies Erfordernisse in Bezug auf das Blasformwerkzeug selbst. So müssen diese beispielsweise Kühlkanäle aufweisen, was wiederum beispielsweise eine Mindestgrösse des Blasformwerkzeugs erfordert. Andererseits betrifft dies Erfordernisse, die durch die spätere Form eines Behälters und/oder durch dessen Material vorgegeben ist. So ist es beispielsweise nur durch die Verwendung spezieller Materialien wie PP oder CoPolymer PET möglich, in einem Streckblasverfahren scharfe Kanten auszubilden. Scharfe Kanten sind Kanten mit einem Radius der kleiner ist als 1.2 mm. Durch Schrumpf und Schwindung sind die aufgeblasenen Behälter im Bereich von Ecken und Kanten nicht dimensionstreu und können von Charge zur Charge oder sogar von Behälter zu Behälter unterschiedliche Abmasse aufweisen, da in diesen Bereichen beispielsweise die Temperaturen nicht genau gehalten werden können und bereits kleine Unterschiede im Materialfluss bzw. in Art und Menge des Ursprungsmaterials, einen nicht unwesentlichen Einfluss auf die Materialmenge hat, die letztlich im Bereich von Ecken und Kanten zu liegen kommt. Je kleiner der gewünschte Radius ist, desto grösser ist dieser Effekt.

Beim Streckblasverfahren wird ein Vorformling in der Kavität des Blasformwerkzeuges aufgeblasen und zusätzlich mit einem Reckdorn gestreckt. Eine Wanddicke des Vorformlings wird während dem Aufblasvorgang dünner. Beim Anlegen des Vorformlings an die Werkzeugwand kühlt die Wandung des Vorformlings ab und der weitere Aufblasvorgang des Vorformlings kann nicht mehr gleichmässig stattfinden. Typischerweise ist der erste Kontakt des aufzublasenden Vorformlings punkt- oder linienförmig. Ab diesem Kontakt fliesst das Material des aufzublasenden Vorformlings unterschiedlich da durch Abkühlung das Material an der Kontaktstelle zäher fliesst. Mit anderen Worten in Richtung von theoretischen scharfen Kanten fliesst das Material immer langsamer und wird entsprechend immer dünner bis es eine Schwachstelle bildet. Der Materialfluss ist zudem auch durch Reibung zwischen der Wandung des teils aufgeblasen Vorformlings und der Kavität behindert.

Blasformverfahren aus dem Stand der Technik sind aus den Dokumenten JPS5656830A, KR101116169B1, US5389332A, EP0393370A2, US5035604A, US2018/257264A1 und GB882790A bekannt.

Es besteht jedoch ein Bedürfnis, Behälter, insbesondere streckblasgeformte Behälter, auch mit scharfen Kanten auszubilden, beispielsweise für eine bessere Stapelbarkeit oder aus optischen Gründen.

Es ist daher Aufgabe der Erfindung zumindest einen oder mehrere Nachteile des Standes der Technik zu beheben. Insbesondere soll ein Blasformwerkzeug mit einem Formkörper sowie eine Streckblasmaschine umfassend ein Blasformwerkzeug und ein Verfahren bereitgestellt werden, die es ermöglichen, einen Behälter zu formen, der über mehrere Produktionszyklen dimensionstreu ist, insbesondere zuverlässig reproduzierbar ist, vorzugsweise ein gefälliges Erscheinungsbild aufweist und insbesondere präzise fertigbar ist.

Diese Aufgabe wird durch die Merkmale des Anspruchs 1 gelöst. Weitere Ausführungsformen ergeben sich aus den abhängigen Patentansprüchen.

Ein erfindungsgemässes Blasformwerkzeug, insbesondere ein Blasformwerkzeug für ein Streckblasverfahren, weist einen Formkörper auf, der eine Kavität als Formnest aufweist. Die Kavität weist einen Bodenbereich, einen Mittelbereich und einen Kopfbereich auf. Bei geschlossenem Blasformwerkzeug ist der Mittelbereich relativ zum Kopfbereich und/oder zum Bodenbereich verschiebbar.

Dies ermöglicht es, die Kavität vor und/oder während und/oder nach dem Blasvorgang in deren Abmessung zu verändern. Insbesondere ist es ermöglicht, die Kavität während und/oder nach dem Blasvorgang zu verkleinern. Ein sich in der Kavität befindlicher aufgeblasener Behälter kann somit bereits während dem Blasvorgang und/oder nach dem Blasvorgang gestaucht werden. Dies ermöglicht es, einer Materialverdünnung entgegenzuwirken und ermöglicht es, an den Schnittstellen der Relativbewegung scharfe Kanten auszubilden.

Vorzugsweise ist der Formkörper mehrteilig ausgebildet und weist einen Kopfteil auf an welchem der Kopfbereich ausgebildet ist, einen Mittelteil an welchem der Mittelbereich ausgebildet ist und einen Bodenteil an welchem der Bodenbereich ausgebildet ist.

Entsprechend kann eine Behälterschulter des aufgeblasenen Behälters relativ zu einem Behälterkörper bewegt werden und entsprechend zwischen Behälterschulter und Behälterkörper eine Stauchung vorgenommen werden und dadurch eine scharfe Kante ausgebildet werden. Bei einer relativen Verschiebbarkeit des Bodenbereichs wird entsprechend ein Behälterboden relativ zum Behälterkörper bewegt und zwischen Behälterkörper und Behälterboden eine Stauchung vorgenommen sodass eine scharfe Kante entsteht.

Es kann dabei vorgesehen sein, dass sowohl zwischen dem Behälterkörper und dem Behälterboden als auch zwischen den Behälterkörper und der Behälterschulter eine scharfe Kante ausgebildet wird.

Eine mehrteilige Ausbildung des Blasformwerkzeugs ermöglicht es einerseits die jeweiligen Teile separat und unabhängig voneinander zu bewegen, andererseits können die jeweiligen Elemente einfach und mit geringem Aufwand ausgetauscht werden. Falls beispielsweise ein Behälterboden eine neue Form erhalten soll, genügt es, den entsprechenden Bodenteil auszutauschen.

Es versteht sich von selbst, dass beispielsweise der Mittelteil, der Bodenteil und/oder der Kopfteil jeweils zweiteilig ausgebildet sein kann um eine entsprechende Teilung der Form entlang einer Längsachse zu ermöglichen, um einen fertigen Behälter aus dem Blasformwerkzeug auszuformen.

Wie weiter oben dargelegt ist ebenso eine mehrteilige Teilung möglich und/oder eine Teilung die asymmetrisch zur Längsachse verläuft.

In einer bevorzugten Ausführungsform kann der Mittelbereich gemeinsam mit dem Bodenbereich relativ zum Kopfbereich verschiebbar sein.

Durch eine derartige Ausbildung wird lediglich in einem bestimmten Bereich eine Stauchung und damit die Bildung einer scharfen Kante erzwungen. Vorliegend bildet sich eine scharfe Kante zwischen dem Behälterkörper und der Behälterschulter des fertigen Behälters.

Dabei kann vorgesehen sein, dass der Mittelteil und der Bodenteil einstückig ausgebildet sind.

Dies ermöglicht eine einfache Fertigung sowie ein einfaches Verschieben des Bodenteils gemeinsam mit dem Mittelteil.

Alternativ kann es vorgesehen sein, dass der Mittelbereich gemeinsam mit dem Kopfbereich relativ zum Bodenbereich verschiebbar ist.

Durch eine derartige Ausbildung wird lediglich in einem bestimmten Bereich eine Stauchung und damit die Bildung einer scharfen Kante erzwungen. Vorliegend bildet sich eine scharfe Kante zwischen dem Behälterkörper und dem Behälterboden des fertigen Behälters.

Dabei kann vorgesehen sein, dass der Mittelteil und der Kopfteil einstückig ausgebildet sind.

Dies ermöglicht eine einfache Fertigung sowie ein einfaches Verschieben des Kopfteils gemeinsam mit dem Mittelteil.

Vorbehalten bleibt bei der einstückigen Ausbildung natürlich die zwei- oder mehrteilige Ausbildung des Blasformwerkzeugs als solches, die eine Trennung des Blasformwerkzeuges zum Entformen des fertigen Behälters ermöglicht.

Vorzugsweise ist der Kopfbereich zumindest teilweise innerhalb des Mittelbereiches angeordnet.

Dadurch kann der Kopfbereich in Bezug zum Mittelbereich innerhalb des Mittelbereichs verschoben werden. Dies vereinfacht den Stauchungsvorgang.

Vorzugsweise ist das Blasformwerkzeug aus zwei Werkzeughälften gebildet.

Die Fertigung des Blasformwerkzeugs ist vereinfacht. Es können symmetrische und insbesondere gleiche Elemente für jede Werkzeughälfte verwendet werden.

Ein weiterer Aspekt der vorliegenden Erfindung betrifft eine Streckblasmaschine umfassend ein Blasformwerkzeug wie vorliegend beschrieben.

Die Streckblasmaschine kann zusammen mit dem Blasformwerkzeug vollständig vorkonfiguriert werden wobei sämtliche Parameter aufeinander abgestimmt sein können.

Ein weiterer Aspekt der vorliegenden Erfindung betrifft ein Verfahren, insbesondere ein Streckblasverfahren, zum Formen eines Behälters, insbesondere zur Bildung einer, vorzugsweise scharfen, Kante an einem Behälter wie vorliegend beschrieben. Das Verfahren umfasst die folgenden Schritte:
- Einbringen eines Vorformlings in eine Kavität eines Blasformwerkzeuges, insbesondere eines Blasformwerkzeuges wie vorliegend beschrieben, wobei die Kavität einen Kopfbereich, einen Mittelbereich und einen Bodenbereich aufweist,
- Aufblasen des Vorformlings zu einem Behälter
- relatives Verschieben des Mittelbereiches zum Kopfbereich und/oder zum Bodenbereich, derart, dass der Behälter zumindest in einem Bereich zur Bildung der Kante gestaucht wird.

Dieses Verfahren ermöglicht die Ausbildung einer insbesondere scharfen Kante und verhindert, dass ein Behälter im Bereich einer Kante sehr dünnwandig und/oder geschwächt wird.

Durch eine Stauchung wird eine Materialverdünnung vermieden, bzw., einer Materialverdünnung entgegengewirkt.

Während des Aufblasens des Vorformlings zu einem Behälter wird dieser insbesondere mit einer Reckstange gestreckt, sodass der fertige Behälter biaxial verstreckt ist, einerseits in Umfangsrichtung durch das Aufblasen und andererseits in axialer Richtung durch das recken des Vorformlings.

Vorzugsweise wird die Kante mit einem Radius kleiner als 0.5 mm gebildet wobei es sich dabei um einen Vorformling aus PET handelt, der mit einer Verstreckung von 1 zu 10 bis 1 zu 16 und einem Kristallisationsgrad von 10 % bis 40 % aufgeblasen wird.

In einer bevorzugten Form des Verfahrens wird der Mittelbereich gemeinsam mit dem Bodenbereich in Richtung des Kopfbereichs verschoben.

Dadurch lässt sich eine scharfe Kante zwischen einem Behälterkörper und einer Behälterschulter ausbilden.

Alternativ kann vorgesehen sein, dass der Mittelbereich gemeinsam mit dem Kopfbereich in Richtung des Bodenbereichs verschoben wird.

Dadurch lässt sich eine scharfe Kante zwischen einem Behälterboden und einem Behälterkörper ausbilden. Eine derartige Kante kann beispielsweise durch ihre Präzision das Stapeln von Behältern erleichtern.

Das Verfahren kann derart fortgeführt werden, dass nach dem gemeinsamen Verschieben des Mittelbereiches und des Bodenbereiches der Bodenbereich in Richtung des Mittelbereiches verschoben wird zur Bildung einer weiteren Kante.

Entsprechend kann ein Behälter mit zwei scharfen Kanten ausgebildet werden.

Vorzugsweise ist während dem Verschieben im Innern des Behälters ein Druck grösser als 20 bar, insbesondere grösser als 30 bar vorzugsweise ein Druck von rund 40 bar aufrechterhalten.

Dies garantiert, dass eine Wandung des Behälters permanent in Kontakt mit der Kavität steht und der aufgeblasene Behälter, der zu diesem Zeitpunkt nach wie vor warm und entsprechend weich ist, nicht in sich zusammenfällt oder sich ungewünscht verformt.

Anhand der nachfolgenden schematischen Figuren wird eine erfindungsgemässe Ausführungsform eines Blasformwerkzeuges näher beschrieben. Es zeigen:
- Figur 1:: Einen schematischen Aufbau eines Blasformwerkzeuges;
- Figur 2:: eine schematische Darstellung einer Ausformung einer Kante im Stand der Technik;
- Figur 3:: eine schematische Darstellung eines Blasformwerkzeuges;
- Figur 4A - 4C:: einen schematischen Ablauf des Blasvorgangs;
- Figur 5A - 5B:: eine Detailansicht einer Kantenbildung;
- Figur 6:: das Blasformwerkzeug sowie ein geformter Behälter nach der Kantenbildung.

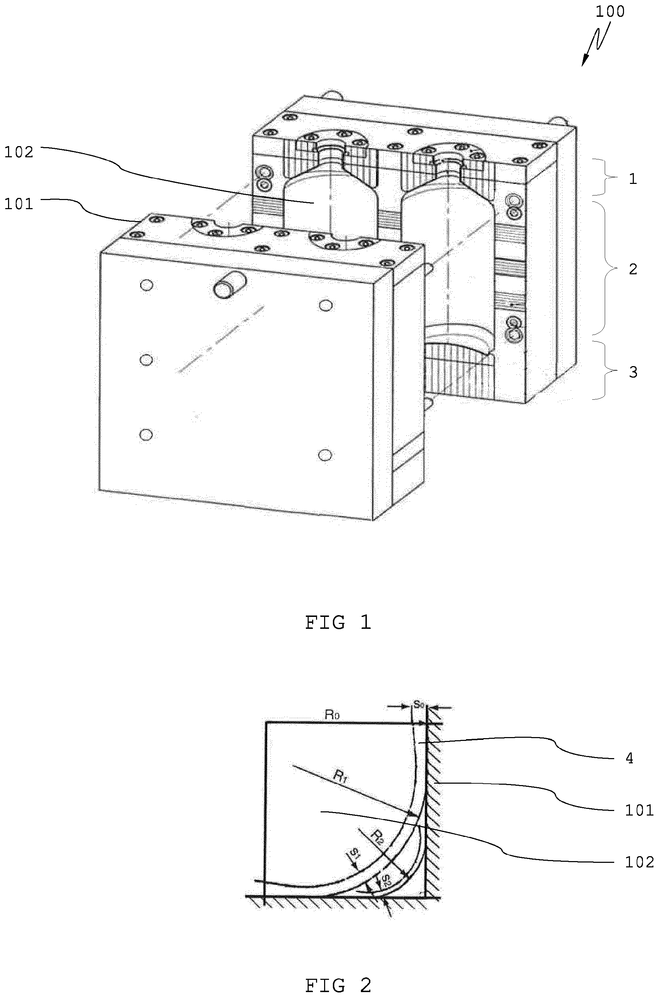

Figur 1 zeigt einen schematischen Aufbau eines Blasformwerkzeuges 100. Das Blasformwerkzeug 100 ist als zweiteiliges Blasformwerkzeug ausgebildet und weist einen Formkörper 101 auf, der ebenfalls zweiteilig ausgebildet ist. Das Blasformwerkzeug 100 weist im Formkörper 101 zwei Kavitäten 102 auf wobei lediglich eine der beiden Kavitäten 102 beschriftet ist. Der Formkörper 101 ist ebenfalls zweiteilig ausgebildet. Die Kavitäten 102 sind vorliegend ausgebildet um eine Flasche darin aufzublasen. Die Kavitäten 102 können in drei Bereiche unterteilt werden, einen Kopfbereich 1, einen Mittelbereich 2, und einen Bodenbereich 3.

Die Figur 2 zeigt eine schematische Darstellung einer Ausformung einer Kante wie sie im Stand der Technik ausgebildet wird. Während dem Blasvorgang legt sich eine Wandung des Vorformlings 4 an eine entsprechende Wandung einer Kavität 102 eines Formkörpers 101 an. In einem Bereich, der entfernt zu einer auszubildenden Ecke oder Kante ist weist der aufgeblasene Vorformling 4 eine Wandstärke S0 auf. Die Wandstärke S0 ist in einem Bereich eingezeichnet in dem ein Radius R0 unendlich ist. Mit anderen Worten die Wandung des Vorformlings 4 liegt vollständig an einer Innenwandung der Kavität 102 an. Durch weiteres Aufblasen des Vorformlings 4 wird das Material des Vorformlings 4 in Richtung der Ecke gedrückt. Durch die vorhergehende Abkühlung im Bereich des unendlichen Radius sowie durch Reibung zwischen der Wandung des Vorformlings 4 sowie der Innenwandung der Kavität 102 fliesst das Material nur noch beschränkt in Richtung der Ecke.

Mit der Verkleinerung des Kantenradius, in der Figur 2 angedeutet mit dem Radius R1 nimmt ebenfalls die Wandstärke des aufgeblasen Vorformlings 4 ab, was durch die Wandstärke S1, die kleiner ist als die Wandstärke S0, angedeutet ist. Durch weiteres Aufblasen wird dieser vorgenannte Effekt noch gesteigert. Wie ersichtlich ist, ist bei einem sehr kleinen Radius R2 die Wandstärke S2 bereits derart dünn, dass sich im Behälter später eine Schwachstelle bildet.

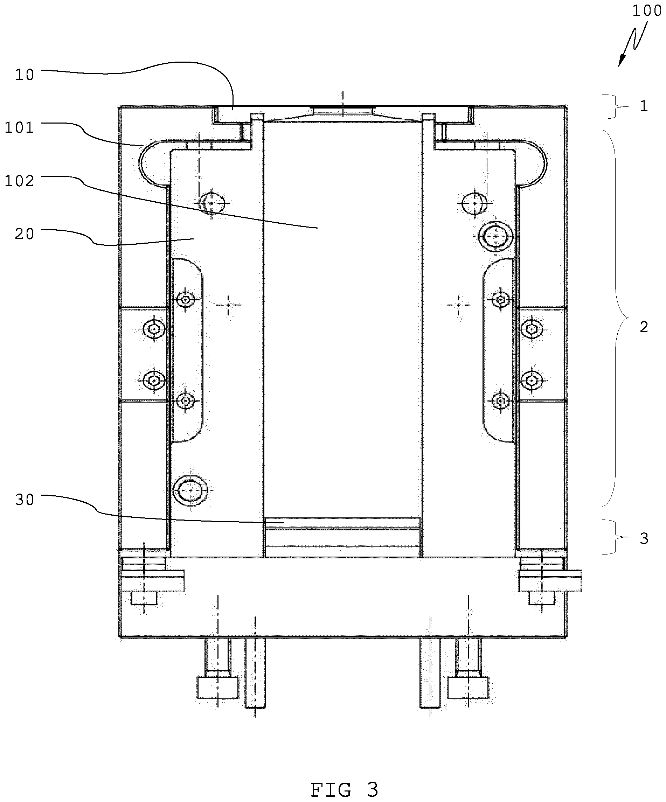

Die Figur 3 zeigt ein Blasformwerkzeug 100. Das Blasformwerkzeug 100 weist einen Formkörper 101 auf in welchem eine Kavität 102 angeordnet ist. Die Kavität 102 teilt sich in drei Bereiche auf, einen Kopfbereich 1, einen Mittelbereich 2, und einen Bodenbereich 3. Der Mittelbereich 2 ist gemeinsam mit dem Bodenbereich 3 in Bezug zum Kopfbereich 1 relativ verschiebbar. Dazu ist der Mittelbereich 2 als Mittelteil 20 sowie der Bodenbereich 3 als Bodenteil 30 jeweils unabhängig ausgebildet. Das Mittelteil 20 ist gemeinsam mit dem Bodenteil 30 relativ zu einem ebenfalls separat ausgebildeten Kopfteil 10 verschiebbar ausgebildet. Das Kopfteil 10 ist zumindest teilweise innerhalb des Mittelteils 20 angeordnet und gleitet damit bereichsweise innerhalb des Mittelteils 20.

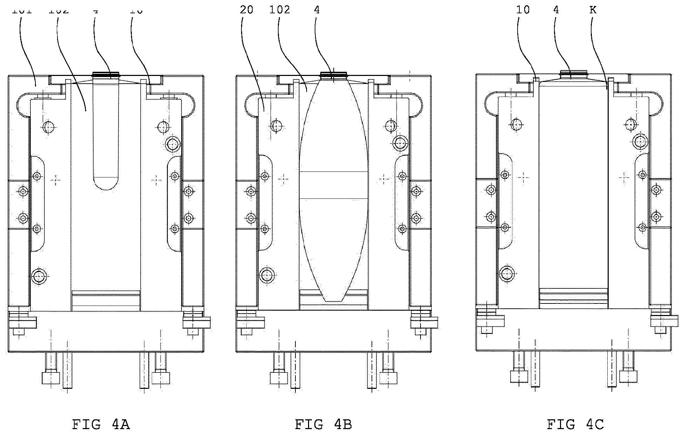

Die Figur 3 zeigt einen schematischen Ablauf des Blasvorgangs. In einem ersten Schritt, der in der Figur 4A gezeigt ist, wird ein Vorformling 4 in die Kavität 102 eines Blasformwerkzeuges bzw. in die Kavität 102 eines Formkörpers 101 eingebracht. Der Vorformling 4 ist derart ausgebildet bzw. wirkt derart mit einem Kopfteil 10 des Blasformwerkzeuges zusammen, dass diese gegenseitig im Eingriff sind. Der Vorformling 4 wurde vor dem Einbringen in die Kavität 102 entsprechend temperiert. Sobald der Vorformling 4 in die Kavität eingebracht wurde, wird dieser mit einem Reckdorn entlang seiner Längsachse gereckt und gleichzeitig mit Druck beaufschlagt so, dass sich die Form des Vorformlings 4 verändert und dieser aufgeblasen wird.

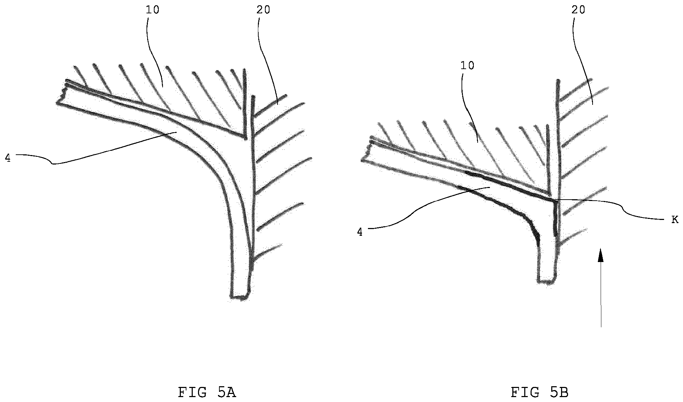

In der Figur 4B ist der Zustand gezeigt, in welchem der Vorformling 4 bereits seine im Wesentlichen vollständige Länge erreicht hat und in einem mittleren Bereich bereits mit einer Innenwandung der Kavität 102 in Kontakt ist. In diesem Bereich kühlt der Vorformling 4 entsprechend etwas ab und das an diesen Bereich angrenzende Material fliesst entsprechend langsamer während des Aufblasvorgangs. Durch weiteres Aufblasen kommt der Vorformling 4 zudem in Anlage mit einer Innenwandung des Kopfteils 10. Dies hat denselben Effekt wie die Anlage des Vorformlings 4 an die Innenwandung der Kavität 102, bzw. an die Innenwandung des Mittelteils 20. Das Material des Vorformlings 4 kühlt ab und wird gehindert, in Richtung der auszubildenden Ecke zu fliessen. Im Stand der Technik würde der Blasvorgang typischerweise an dieser Stelle unterbrochen, sodass an der Ecke ein relativ grosser Radius stehen bleibt (vergleiche dazu den Radius R2 in der Figur 2). Um dennoch eine scharfe Kante auszubilden ist deshalb im Unterschied zum Stand der Technik vorgesehen, den Mittelteil 20 in Richtung des Kopfteils 10 zu bewegen und so den Vorformling im Bereich der Ecke oder der auszubildenden Kante zu stauchen. Dieser Vorgang wird anhand der nachfolgenden Figuren 5A und 5B im Detail erläutert.

Die Figuren 5A und 5B zeigen eine Detailansicht einer Kantenbildung. Die Figur 5A entspricht dem Zustand der gemäss der Figur 4C bereits erläutert wurde. Wie bereits aus der Figur 5A ersichtlich ist, ist das Kopfteil 10 in Bezug zum Mittelteil 20 entkoppelt und entsprechend relativ dazu verschiebbar, bzw., im vorliegenden Fall ist das Mittelteil 20 relativ zum Kopfteil 10 verschiebbar. Sobald eine Wandung des Vorformlings 4 eine entsprechend dünne Wandstärke erreicht hat wird das Mittelteil 20 in Richtung des Kopfteils 10 in Pfeilrichtung (siehe dazu Figur 5B) bewegt. Die Wandung des Vorformlings 4 wird dabei gestaucht und es bildet sich eine Kante K aus. Die Kante K ist vorliegend als eine scharfe Kante K ausgebildet mit einem Radius von weniger als 0.5 mm. Aus der Figur 5B ist zudem ersichtlich, dass im Bereich der Kante K die Wandstärke des Vorformlings 4 entsprechend dicker ausgebildet ist und somit im Bereich dieser Kante eine erhöhte Stabilität aufweist.

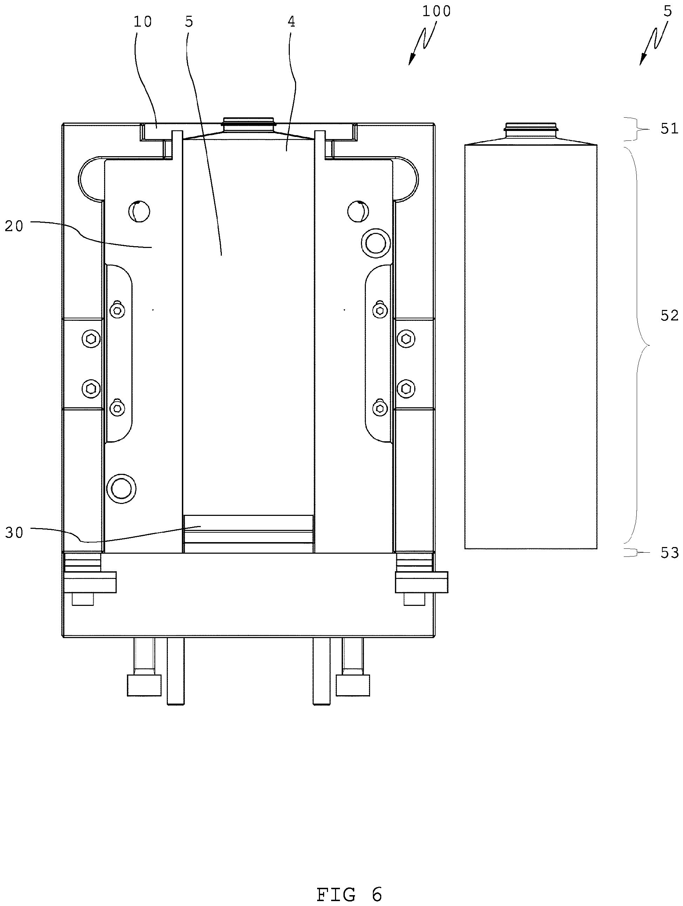

Die Figur 6 zeigt das Blasformwerkzeug 100 sowie einen geformten Behälter nach der Kantenbildung. Das Blasformwerkzeug 100 ist in der Figur 6 in seiner finalen Lage gezeigt. Der Vorformling 4 ist vollständig aufgeblasen und zu einem Behälter 5 ausgebildet. Das Mittelteil 20 wurde in Richtung des Kopfteils 10 bewegt und zwischen einer Behälterschulter 51 und einem Behälterkörper 52 eine scharfe Kante ausgebildet. Zudem wurde ein Bodenteil 30 ebenfalls in Richtung des Kopfteils 10 bewegt und damit zwischen dem Behälterkörper 52 und einem Behälterboden 53 ebenfalls eine scharfe Kante ausgebildet. Der Behälterboden 53 weist im vorliegenden Fall praktisch keine axiale Ausdehnung mehr auf.

Es versteht sich, dass die vorliegende Figurenbeschreibung jeweils die Ansicht auf ein geöffnetes Blasformwerkzeug 100 zeigt. Mit anderen Worten gezeigt ist jeweils eine Hälfte des Blasformwerkzeuges 100. Sämtliche Ausführungen gelten sinngemäss für die zweite Hälfte dieses zweiteiligen Blasformwerkzeuges 100.

## Patentansprüche

1. Streckblasverfahren zur Bildung einer scharfen Kante an einem Behälter, wobei das Verfahren folgende Schritte aufweist:
- Einbringen eines Vorformlings in eine Kavität (102) eines Blasformwerkzeuges (100), wobei die Kavität (102) einen Kopfbereich (1), einen Mittelbereich (2) und einen Bodenbereich (3) aufweist und wobei bei geschlossenem Blasformwerkzeug (100) der Mittelbereich (2) relativ zum Kopfbereich (1) und/oder zum Bodenbereich (3) verschiebbar ist,
- Aufblasen des Vorformlings zu einem Behälter
- relatives Verschieben des Mittelbereiches (2) zum Kopfbereich (1) und/oder zum Bodenbereich (3), derart, dass der Behälter zumindest in einem Bereich zur Bildung der Kante gestaucht wird.

2. Verfahren nach Anspruch 1, **dadurch gekennzeichnet, dass** die Kante mit einem Radius kleiner als 0,5 mm gebildet wird.

3. Verfahren nach Anspruch 1 oder 2, **dadurch gekennzeichnet, dass** der Mittelbereich (2) gemeinsam mit dem Bodenbereich (3) in Richtung des Kopfbereichs (1) verschoben wird.

4. Verfahren nach Anspruch 1 oder 2, **dadurch gekennzeichnet, dass** der Mittelbereich (2) gemeinsam mit dem Kopfbereich (1) in Richtung des Bodenbereichs (3) verschoben wird.

5. Verfahren nach Anspruch 4, **dadurch gekennzeichnet, dass** nach dem gemeinsamen Verschieben des Mittelbereiches (2) und des Bodenbereiches (3) der Bodenbereich (3) in Richtung des Mittelbereiches (2) verschoben wird zur Bildung einer weiteren Kante.

6. Verfahren nach einem der Ansprüche 1 bis 5, **dadurch gekennzeichnet, dass** während dem Verschieben im Innern des Behälters ein Druck grösser als 20 bar, insbesondere grösser als 30 bar, vorzugsweise von rund 40 bar aufrechterhalten wird.

## Claims

1. Stretch blow method for forming a sharp edge on a container - wherein the method has the following steps:
- introducing a preform into a cavity (102) of a blow mold (100), wherein the cavity (102) has a top region (1), a center region (2), and a bottom region (3) and wherein, when the blow mold (100) is closed, the center region (2) can be moved relative to the top region (1) and/or relative to the bottom region (3),
- inflating the preform to form a container,
- relative movement of the center region (2) to the top region (1) and/or to the bottom region (3), such that the container is compressed at least in a region for forming the edge.

2. Method according to claim 1, **characterized in that** the edge is formed with a radius of less than 0.5 mm.

3. Method according to claim 1 or 2, **characterized in that** the center region (2) together with the bottom region (3) is moved in the direction of the top region (1).

4. Method according to claim 1 or 2, **characterized in that** the center region (2) together with the top region (1) is moved in the direction of the bottom region (3).

5. Method according to claim 4, **characterized in that**, after the joint movement of the center region (2) and the bottom region (3), the bottom region (3) is moved in the direction of the center region (2) in order to form a further edge.

6. Method according to one of claims 10 through 14, **characterized in that** a pressure greater than 20 bar - in particular, greater than 30 bar, and preferably approximately 40 bar - is maintained inside the container during movement.

## Revendications

1. Procédé d'étirage-soufflage pour former un bord tranchant sur un récipient, dans lequel le procédé présente les étapes suivantes :
- l'introduction d'une préforme dans une cavité (102) d'un moule de soufflage (100), dans lequel la cavité (102) présente une zone de tête (1), une zone centrale (2) et une zone de fond (3) et dans lequel la zone centrale (2) est déplaçable par rapport à la zone de tête (1) et/ou à la zone de fond (3) lorsque le moule de soufflage (100) est fermé,
- le soufflage de la préforme en un récipient
- le déplacement relatif de la zone centrale (2) par rapport à la zone de tête (1) et/ou à la zone de fond (3), de sorte que le récipient soit comprimé au moins dans une zone de formation du bord.

2. Procédé selon la revendication 1, **caractérisé en ce que** le bord est formé avec un rayon inférieur à 0,5 mm.

3. Procédé selon la revendication 1 ou 2, **caractérisé en ce que** la zone centrale (2) est déplacée conjointement avec la zone de fond (3) en direction de la zone de tête (1).

4. Procédé selon la revendication 1 ou 2, **caractérisé en ce que** la zone centrale (2) est déplacée conjointement avec la zone de tête (1) en direction de la zone de fond (3).

5. Procédé selon la revendication 4, **caractérisé en ce qu'**après le déplacement conjoint de la zone centrale (2) et de la zone de fond (3), la zone de fond (3) est déplacée en direction de la zone centrale (2) pour former un autre bord.

6. Procédé selon l'une quelconque des revendications 1 à 5, **caractérisé en ce qu'**une pression supérieure à 20 bar, en particulier supérieure à 30 bar, de préférence d'environ 40 bar est maintenue pendant le déplacement à l'intérieur du récipient.
